# EUROPEAN PATENT SPECIFICATION

(11) **EP 3 116 362 B1**
(45) Date of publication and mention of the grant of the patent: **19.07.2017**
(21) Application number: 16705539.1
(22) Date of filing: 21.02.2016
(51) Int. Cl.: A47J 43/06, A47J 43/08

(54) **TOOL DETECTION FOR KITCHEN APPLIANCES**
WERKZEUGERKENNUNG FÜR KÜCHENGERÄTE
DÉTECTION D'OUTIL DESTINÉ À DES APPAREILS DE CUISINE

(30) Priority: 26.02.2015 EP 15156686
(43) Date of publication of application: 18.01.2017
(73) Proprietor: Koninklijke Philips N.V., 5656 AE Eindhoven (NL)
(72) Inventor: WEISS, Sascha, 5656 AE Eindhoven (NL); SIGOT, Thomas, Leonhard, 5656 AE Eindhoven (NL)
(74) Representative: Niessen, Arnoldus Jeroen
(86) International application number: PCT/EP2016/053615
(87) International publication number: WO 2016/135068

(56) References cited:
- WO-A1-2014/124859
- GB-A- 2 456 045
- US-A1- 2014 322 411

## Description

### FIELD OF THE INVENTION

The invention relates to kitchen appliances and in particular to kitchen appliances with exchangable tools.

### BACKGROUND OF THE INVENTION

Electrically powered kitchen appliances are becoming increasingly popular around the world. Such kitchen appliances include hand blenders, blenders, food processors, bread makers and mixers, typically including one or more accessories driven by an electric motor. To meet a variety of needs, appliances are being designed with an increasing number of applications and functions.

In some kitchen appliances, the variety of functions may be included in a single integrated device. In such appliances, it is easy to control the different functions and to adjust the motor power and speed for each function, since the user adjusts a control to select the required function and that control can both select the required function and also select suitable motor drive parameters such as motor speed which in turn influences motor torque.

However, many kitchen appliances include a power unit and a variety of accessories. The accessories may be adapted to local markets and cooking styles around the world. In such a case it is more difficult to ensure the correct motor drive parameters in view of the large number of possible accessories and functions.

US2013/192477 teaches a motorised base apparatus which can be connected to a blender head. The blender head includes a magnet that is sensed by a Hall-effect sensor on the motorised base apparatus, to allow the combined unit to operate as a blender when the motorised base apparatus detects the blender head.

However, this solution only selects between two different operating modes and still requires correct user operation. Document GB-A-2 456 045 discloses a control method for a food blending apparatus to minimise the shaking of the device by controlling the speed of the motor, using a sensed vibration to calculate and amend the rotation speed of the motor.

Document US-A-2014/322411 discloses an extractor device comprising vibration sensors for sensing vibration of the device during its operation, and controlling the speed of the motor based on the measured vibration for reducing the shaking of the device. If the vibration exceeds a predetermined threshold lever, the control unit activates an emergency brake.

Document WO-A-2014/124859 discloses a portable drive unit for food preparation tools, said unit comprising a Hall effect sensor for identifying the type of tool connected to the unit, which enables the speed of the motor to be automatically adjusted to the type of tool selected by the user.

### SUMMARY OF THE INVENTION

The invention is defined by the claims.

According to examples in accordance with an aspect of the invention, there is provided a kitchen appliance power unit of a kitchen appliance, comprising:
a mechanical interface for connecting a tool;
a motor for rotating the mechanical interface to drive the tool;
a controller for controlling the motor; and
a vibration sensor arranged to sense vibrations of a tool connected to the mechanical interface, the vibration sensor being connected to the controller for feeding information representing the sensed vibration to the controller;
wherein, the controller is arranged to identify which of a plurality of classes of tool is connected to the power unit from the sensed vibration information.

By using a vibration sensor in the power unit, it is possible to obtain feedback information about the operation of the tool during use without requiring the tool to have any electrical connections, sensors, or electronic equipment such as radio frequency identification (RFID) tags. Approaches using RFID tags, mechanical direct connection or electrical direct connection are in particular vulnerable to dirt, food remains, or cleaning detergents. Further, sealing such approaches increases the complexity and cost of the potential solution. Accordingly, integration of such connections, sensors or equipment in a tool is generally undesirable and can lead to an increased cost of the tool especially as the tools need to be washable and in particular may need to be dishwasher safe.

Thus, a solution using a vibration sensor avoids the need of any user controls such as knobs, buttons or switches connected to the controller to allow the user to select the correct setting for the power unit. In such a comparative case, the user would attach an accessory to the mechanical connection and operate the user controls to select a corresponding setting for the power unit. However, this comparative case would require that the user-selected setting must be correct. It might be thought that directions for use, Quick Start Guides or on-product pictograms could be used to guide the user to select a correct combination of the setting on the power unit with the appropriate accessory. Unfortunately, this approach might lead to consumer confusion. Indeed, not all users read directions for use or the quick start guides and even those who do read instructions can make mistakes. Accordingly, incorrect combinations of motor drive setting and accessory might be selected leading to poor results, consumer complaints and even product returns.

In contrast, the vibration sensor is able to feed back information about the tool without requiring any user operation or selection of a control on the kitchen appliance power unit.

The kitchen appliance power unit may include an on-off switch. Further, the kitchen appliance power unit may include a speed control. Thus, the kitchen appliance power unit only needs to have simple controls to operate.

The kitchen appliance power unit may also have a switch for controlling the functionality of the vibration detection, in particular to switch the functionality resulting from the vibration sensor on and off. This can allow the kitchen appliance power unit to operate under user control if required.

The controller may contain a memory storing information regarding a plurality of classes of tool and corresponding drive patterns, the controller being arranged to drive the motor in a drive pattern selected from a plurality of drive patterns on the basis of the identified class of tool. This allows each tool to be driven in a correct pattern. For example, some tools may require a lower drive speed and/or higher torque than other tools, other tools may require an intermittent or pulsed drive.

The controller may be a brushless motor. It is possible to independently select both speed and torque using such a motor.

Further, the controller may be arranged to adapt the drive of the motor dynamically based on the vibration information. In this way, the drive of the tool can be adapted depending on the properties of the materials being processed.

The power unit may comprise a housing, the mechanical interface extending through the housing. The vibration sensor may be arranged in the housing within or adjacent to the mechanical interface to pick up vibrations most effectively.

In embodiments, the mechanical interface includes a shaft extending through the housing and the vibration sensor may be mounted adjacent to the shaft.

The vibration sensor may be a piezoelectric transducer.

Another aspect of the invention relates to a kitchen appliance kit comprising:
a power unit comprising: a mechanical interface for connecting a tool; an electric motor for rotating the mechanical interface to drive the tool; a controller for controlling the electric motor; and a vibration sensor arranged to sense mechanical vibrations of a tool connected to the mechanical interface, the vibration sensor being connected to the controller for feeding information representing the sensed vibration to the controller; and
a plurality of tools for connection to the mechanical interface;
wherein, each class of tool vibrates in a different way when connected to the power unit; and the controller is arranged to identify which of a plurality of classes of tools is connected to the power unit from the sensed vibration information. Note that the classes of tool can contain only a single tool, i.e. individual tools may be arranged to rotate differently.

Each tool may be adapted to vibrate at a characteristic frequency corresponding to the class of tool, wherein each class of tool has a different characteristic frequency.

In some cases, these characteristic frequencies may be resonant frequencies of parts of the tool or the whole tool. In other cases, the resonant frequencies may be inappropriate and other characteristic peaks may be chosen. This may be the case especially for devices which require significant mechanical energy, such as juicers.

The controller may be arranged to select a drive pattern for the electric motor on the basis of the identified class of tool or individual tool among the plurality of classes of tool.

Each of the tools may be arranged to have a characteristic vibration axially or radially with respect to the rotation axis of the mechanical interface when the tool is connected to the power unit and driven by the motor.

In another aspect, the invention relates to a method of operation of a kitchen appliance having a power unit with a motor and at least one tool, the tool being detachable, the method comprising:
connecting a tool to the power unit;
driving the motor to drive the tool;
sensing the vibrations of the tool with a vibration sensor in the power unit; and
identifying the class of tool from the vibrations.

The method may further include selecting a drive pattern from a plurality of drive patterns based on the identified class of tool; and driving the motor according to the selected drive pattern.

The step of driving the motor according to the selected drive pattern may include adapting the drive of the motor dynamically based on the sensed vibrations.

### BRIEF DESCRIPTION OF THE DRAWINGS

Examples of the invention will now be described in detail with reference to the accompanying drawings, in which:
Fig. 1 illustrates a kit having a kitchen appliance and a plurality of tools;
Fig. 2 is a schematic of the power unit with a tool attached;
Fig. 3 is a flow diagram of the operation of the power unit.

### DETAILED DESCRIPTION OF THE EMBODIMENTS

The invention provides an electrically powered kitchen appliance.

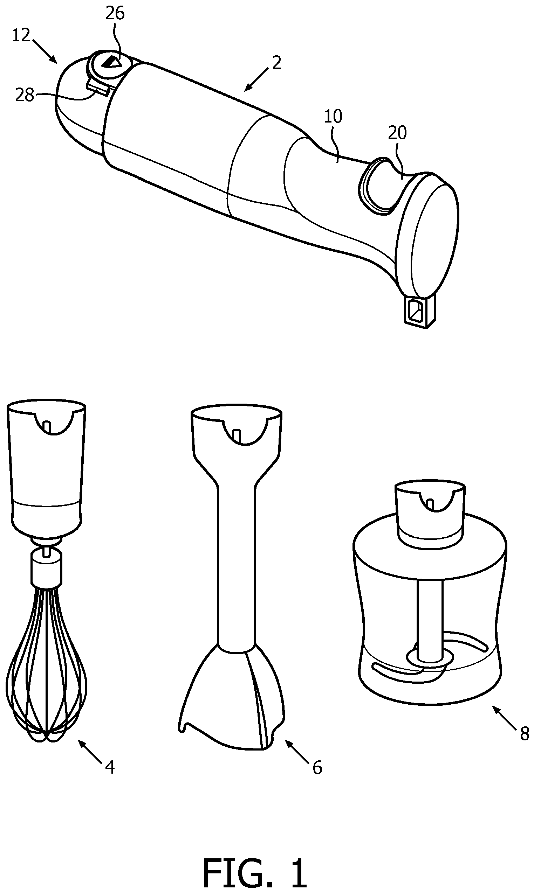

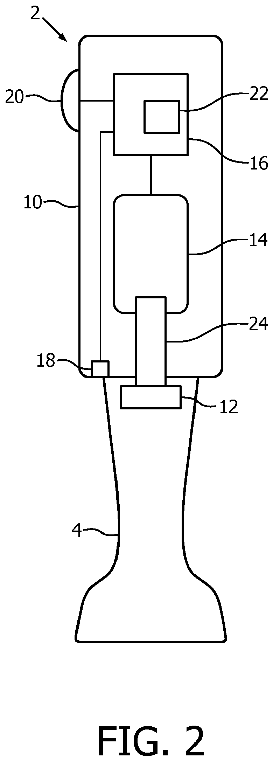

Referring to Figs. 1 and 2, a power unit 2 provides power for one of a number of tools 4, 6, 8. In the example, the power unit 2 is a power unit of a hand blender. The tools include a blender attachment 4, a whisk attachment 6 and a food processor attachment 8, the latter including a bowl, a blade and adapter to allow the power unit 2 to rotate the blade in the bowl to process food.

The power unit 2 has a housing 10 and includes a coupling 12 which is a mechanical interface for coupling a rotary drive to one of the tools. Tools 4, 6, 8 may be attached in a releasable manner so that the tools may be attached and detached from the power unit 2. In the example, external detent tangs 28 are used to clip the a tool 4, 6, 8 to the power unit 2 and the tool may be released by operating release switch 26 which retracts detent tang 28 releasing the tool.

An electric motor 14 is provided which is mechanically coupled to the coupling 12 to rotate the coupling 12 and hence provide a rotary drive to a rotary part of a tool 4, 6, 8 connected to the coupling. The electric motor 14 is powered by controller 16.

A vibration sensor 18 is mounted on the housing adjacent to the coupling 12 to sense vibration. The vibration sensor is electrically connected to the controller 16 so that a signal representing the sensed vibration is passed to the controller. The vibration sensor 18 in this example is a piezoelectric sensor. Alternatively, the vibration sensor may be incorporated in the controller 16.

An on/off switch 20 is provided connected to the controller.

The controller 16 is programmed to drive the electric motor 14 in a plurality of drive patterns. The drive patterns may vary in rotary speed and the applied torque. Some drive patterns may include an intermittent or pulsed drive. The drive patterns are stored in memory 22 of the controller.

The memory 22 stores a plurality of vibration patterns associated with respective classes of tools. The controller is programmed to take the signals from the vibration sensor 18 and to identify which class of tool has been attached based on the signals. For example, the tools may be designed with a different characteristic resonant frequency for axial vibration for each class of tool, and the controller programmed to identify the resonant frequency and hence class of tool.

In alternative embodiments, more complex signatures than a simple resonant frequency may be used to identify tools and/or classes of tool.

The controller may select a suitable drive pattern for the electric motor based on the identified class of tool, or individual tool. In particular, the controller may adjust the drive voltage or drive speed. For some identified classes of tools or tools, the controller may pulse the motor drive.

In the embodiment illustrated, the tools are divided into four potential tool classes. Each different tool is assigned to a class. In this way, it is possible to add accessories after manufacture of the motor unit of the kitchen appliance since any new tool may be assigned to one of the classes to be driven correctly.

The classes are:
(a) Speed driven tools with low torque;
(b) Short run-time with high torque;
(c) Long runtime; and
(d) Highest mechanical power.

The operation of the tool may be determined by the class. For example, a tool in class (c) will be driven in a condition where speed and torque deliver the lowest power loss, to avoid overheating, while a tool in class (b) will be driven at maximum torque and a tool in class (a) at high speed.

Note that the above list of classes is not exhaustive and other classes may be used. In particular, if a particular tool requires a different operation to the operation of a particular class, then that tool can effectively be defined as an additional class with that tool as a single member of the class. In this way, flexibility is maintained.

Note that the drive of the tool is associated with rotation about the axis of the coupling 12, and therefore vibrations in the axial direction are particularly useful for sensing and for indicating the class of tool.

In a preferred embodiment of the invention, there is provided a kit containing a power unit and a plurality of different tools.

Each class of tool is adapted to give a corresponding vibration pattern. Alternatively, each of the tools may be adapted to generate a different vibration pattern.

One approach for adapting the vibration of the tool 4, 6, 8 to have the required signature is to adapt the stiffness of the tool such that the tool has a characteristic resonant frequency corresponding to the class of tool. A different characteristic resonant frequency may be chosen for each class of tool, and that frequency detected in the vibration pattern.

An alternative approach is to design the tool with a separate region or part with a resonant frequency, again a characteristic resonant frequency corresponding to the particular class of tool.

A further alternative is not to use resonant frequencies but also to use other vibrations that occur when operating the equipment.

Yet further, instead of providing additional components it is also possible to provide damping of particular frequencies in particular directions to provide further opportunity to define a large variety of different vibration patterns to encode a large variety of classes of tool.

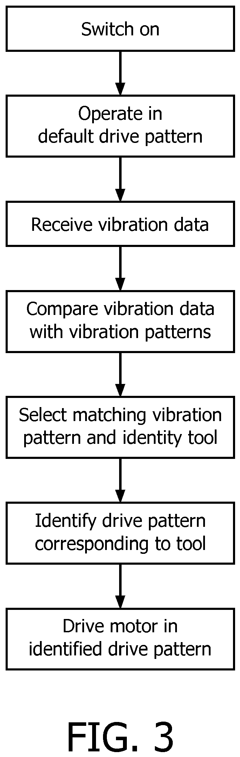

The operation of the controller is illustrated schematically in the flow diagram of Fig. 3.

First, the user attaches the required tool to the coupling 12. Then, the user operates the on/off switch 20 to switch the electrically powered kitchen appliance on.

The controller then operates the tool in a default drive pattern which may be at a relatively low speed.

The vibration sensor 18 picks up the resulting vibrations and feeds the information back to the controller in the form of vibration data. The controller then compares the resulting vibrations with the plurality of vibration patterns stored in memory and identifies the vibration pattern that matches the vibrations most closely. Each vibration pattern is associated with a particular class of tool and the controller identifies the class of tool from the identified vibration pattern. There may be more than one vibration pattern for each class of tool since the detected vibrations may depend not merely on the tool but also on the foodstuff presently being processed by the tool.

The controller then drives the electric motor using a drive pattern corresponding to the identified class of tool.

In the case of a permanent magnet or universal motor the drive patterns may in particular correspond to speed settings as a function of time, which then determines the available torque.

In an alternative arrangement, a motor is used which allows control of both speed and torque independently, such as a brushless motor. In this case, the drive pattern determines both the speed and torque settings.

Note that the drive pattern need not be fixed for each tool or class of tool. The controller may adjust the drive pattern over time based on the measured pattern of vibration. For example, the pattern of vibration may indicate how much resistance to motion of the tool is present and the drive pattern may be adjusted depending on the amount of resistance. As the resistance to motion changes the vibration pattern may change and this may be used to adjust the drive pattern accordingly.

By driving the electric motor with a plurality of different drive patterns in this way the drive of the electric motor can be adapted for each tool and possibly the conditions experienced by the tool. By driving the tool with the correct drive pattern the correct rotary speed and torque for the operation of that tool can be identified.

Further, note that the drive pattern may be adjusted continuously or at intervals, for example every 0.1 to 60 seconds, typically every 1 to 10 seconds. In this way, changing vibrations determined by the motor warming up or the foodstuff changing may be used to adjust the motor accordingly.

Accordingly, the motor operates in the correct operating range leading to less power loss (heat) and consequently longer running times.

In some cases, it may be possible to simplify the design of tools. Some tools intended for use with an electric motor of fixed rotary speed require gears to adjust the fixed rotary speed of the motor to the required speed for operation of the tool. By sensing which tool is connected to the motor the motor can be driven at the correct speed to correspond to the tool and avoid the need for gears.

In some cases it may be possible to achieve improved operation of the tool. The selection of correct drive speed and torque by the drive pattern may be combined with the gearing in a tool optimise the operating point of the motor by choosing the tool gearing optimally not based on a fixed operating speed of the motor but based on the optimum operating speed of the motor to improve operation. This may be generally useful but in particular for stiff foodstuffs used in long term operations for which power loss and heat becomes significant constraints. This approach is particularly useful when combined with a motor for which speed and torque can be independently adjusted such as a brushless motor.

Further, the tools preferably do not require the addition of any electronic parts such as an radio field identification (RFID) tag. Such tags may not be suitable for dishwashers and also increase the expense of manufacture of the tool, since the tag typically would need to be embedded in the tool. However, such tags are not excluded where they are required for other reasons.

The system does not need pre-configuration, since new tools can be ascribed the properties of an existing tool or class of tool.

It is not necessary that the mechanical interface fixes the tool to the power unit 2. All that is required is a mechanical interface that may allow the power unit to allow it to drive a variety of tools.

Further, the drive of the tool can be adapted. Many foodstuffs change during processing - the resistance to motion can in some cases reduce, for example when blending vegetables after the vegetables are already in small pieces, or increase for example when beating eggs. By measuring the vibrations using the vibration sensor 18 the controller can adapt the drive, for example by slowing the drive speed as resistance to motion increases.

The use of an adaptable drive which can be driven in the correct drive pattern for each tool makes it easier to provide multiple different tools which may be suitable for different food preparation techniques and hence be adapted for sale in different regions, countries, or at different price points.

Further, note that the way in which the signals from the drive unit are processed may be varied. Instead of a plurality of vibration signatures and drive patterns of different classes of tool stored in memory, alternative techniques which use the vibration data to infer properties of the tool and adapt the speed and/or torque of the motor may be used.

To make it easier to update the controller, the drive patterns of various tools may be stored not in memory 22 of the controller but in an additional memory chip. This allows the additional memory chip to be updated with new drive patterns to make it easier to change the drive patterns over time without needing to re-engineer the complete controller 16.

A further possibility is to provide a digital/internet connection in the controller 16 to enable updated drive patterns or vibration patterns to be uploaded to the power unit. This allows for automatic updating to cope with new designs of tool after manufacture of the power unit 2.

Additional sensors may also be used and combined with the vibration information to select a drive pattern. For example, a temperature sensor may be provided. This may detect for example steam being emitted by the foodstuff and adjust the processing accordingly.

Other variations to the disclosed embodiments can be understood and effected by those skilled in the art in practicing the claimed invention, from a study of the drawings, the disclosure, and the appended claims. Any reference signs in the claims should not be construed as limiting the scope.

## Claims

1. A power unit (2) of a kitchen appliance, comprising:
a mechanical interface (12) for connecting a tool;
a motor (14) for rotating the mechanical interface to drive the tool;
a controller (16) for controlling the motor; and
a vibration sensor (18) arranged to sense vibrations of a tool (4,6,8) connected to the mechanical interface, the vibration sensor being connected to the controller (16) for feeding vibration information representing the sensed vibration to the controller;
wherein, the controller (16) is arranged to identify which of a plurality of classes of tools (4,6,8) is connected to the power unit from the sensed vibration information.

2. The power unit according to claim 1, wherein the controller (16) contains a memory (22) storing information regarding a plurality of classes of tools (4,6,8) and corresponding drive patterns, the controller being arranged to drive the motor in a drive pattern selected from a plurality of drive patterns on the basis of the identified class of tool.

3. The power unit according to claim 1 or 2, wherein the controller (16) is arranged to adapt the drive of the motor (14) dynamically based on the vibration information.

4. The power unit according to any of claims 1 - 3, wherein the power unit (2) comprises a housing (10), the mechanical interface (12) extends through the housing and the vibration sensor (16) is arranged in the housing adjacent to the mechanical interface.

5. The power unit of according to any of claims 1 - 4, wherein the motor (2) is a brushless motor.

6. A kitchen appliance kit comprising:
a power unit (2) comprising: a mechanical interface (12) for connecting a tool (4,6,8); an electric motor (14) for rotating the mechanical interface to drive the tool; a controller (16) for controlling the electric motor; and a vibration sensor (18) arranged to sense mechanical vibrations of a tool connected to the mechanical interface, the vibration sensor (18) being connected to the controller (16) for feeding information representing the sensed vibration to the controller; and
a plurality of tools (4,6,8) for connection to the mechanical interface;
wherein:
each tool (4,6,8) vibrates when connected to the power unit; and
the controller is arranged to identify which of a plurality of classes of tools (4,6,8) is connected to the power unit from the sensed vibration information.

7. The kit according to claim 6, wherein the controller is arranged to select a drive pattern for the electric motor (10) on the basis of the identified class of tool among the plurality of classes of tool.

8. The kit according to claim 6 or 7, wherein each of the tools (4,6,8) is arranged to have a characteristic vibration axially or radially with respect to the rotation axis of the mechanical interface when the tool is connected to the power unit and driven by the motor.

9. The kit according to any of claims 6 to 8, wherein each tool (4,6,8) is adapted to vibrate at a characteristic frequency corresponding to the class of tool, wherein each class of tool has a different characteristic frequency.

10. The kit according to any of claims 6 to 9, wherein the vibration sensor (18) is arranged in the power unit adjacent to the mechanical interface (16).

11. A method of operation of a kitchen appliance having a power unit (2) with a motor (14) and at least one tool (4,6,8), the tool being detachable, the method comprising:
connecting a tool (4,6,8) to the power unit;
driving the motor (14) to drive the tool;
sensing the vibrations of the tool (4,6,8) with a vibration sensor (18) in the power unit; and
identifying the class of tool from the vibrations.

12. A method according to claim 11, further comprising:
selecting a drive pattern from a plurality of drive patterns based on the identified class of tool; and
driving the motor (14) according to the selected drive pattern.

13. The method of claim 11 or 12, wherein the step of driving the motor according to the selected drive pattern includes adapting the drive of the motor dynamically based on the sensed vibrations.

## Patentansprüche

1. Antriebseinheit (2) für ein Küchengerät, die umfasst:
eine mechanische Schnittstelle (12) zum Verbinden eines Werkzeugs;
einen Motor (14) zum Rotieren der mechanischen Schnittstelle zum Antreiben des Werkzeugs;
eine Steuereinheit (16) zum Steuern des Motors; und
einen Vibrationssensor (18), eingerichtet zum Erfassen von Vibrationen eines mit der mechanischen Schnittstelle verbundenen Werkzeugs (4, 6, 8), wobei der Vibrationssensor mit der Steuereinheit (16) verbunden ist, um die Vibrationsdaten, welche die erfassten Vibrationen darstellen, an die Steuereinheit weiterzuleiten;
wobei die Steuereinheit (16) eingerichtet ist, zu erkennen, welche aus einer Vielzahl von Klassen von Werkzeugen (4, 6, 8) mit der Antriebseinheit verbunden ist aus den erfassten Vibrationsdaten.

2. Antriebseinheit nach Anspruch 1, wobei die Steuereinheit (16) einen Speicher (22) enthält, der Daten zu der Vielzahl von Werkzeugen (4, 6, 8) und den zugehörigen Antriebsmustern speichert, wobei die Steuereinheit eingerichtet ist, den Motor mit einem Antriebsmuster anzutreiben, das aus einer Vielzahl von Antriebsmustern auf der Basis der festgestellten Werkzeugklasse ausgewählt ist.

3. Antriebseinheit nach Anspruch 1 oder 2, wobei die Steuereinheit (16) eingerichtet ist, den Antrieb des Motors (14) dynamisch auf der Basis der Vibrationsdaten anzupassen.

4. Antriebseinheit nach einem der Ansprüche 1 - 3, wobei die Antriebseinheit (2) ein Gehäuse (10) umfasst, die mechanische Schnittstelle (12) sich durch das Gehäuse erstreckt und der Vibrationssensor (16) im Gehäuse benachbart zur mechanischen Schnittstelle eingerichtet ist.

5. Antriebseinheit nach einem der Ansprüche 1 - 4, wobei der Motor (2) ein bürstenloser Motor ist.

6. Küchengeräteausstattung, die umfasst:
eine Antriebseinheit (2), die umfasst: eine mechanische Schnittstelle (12) zur Verbindung eines Werkzeugs (4, 6, 8); einen Elektromotor (14) zur Rotation der mechanischen Schnittstelle zum Antrieb des Werkzeugs; eine Steuereinheit (16) zum Steuern des Elektromotors; und einen Vibrationssensor (18), eingerichtet zum Erfassen mechanischer Vibrationen eines mit der mechanischen Schnittstelle verbundenen Werkzeugs, wobei der Vibrationssensor (18) mit der Steuereinheit (16) verbunden ist, um die Vibrationsdaten, welche die erfassten Vibrationen darstellen, an die Steuereinheit weiterzuleiten; und
eine Vielzahl von Werkzeugen (4, 6, 8) zur Verbindung mit der mechanischen Schnittstelle;
wobei:
jedes Werkzeug (4, 6, 8) vibriert, wenn es mit einer Antriebseinheit verbunden ist; und die Steuereinheit
eingerichtet ist, aus den erfassten Vibrationsdaten zu erkennen, welche aus einer Vielzahl von Klassen von Werkzeugen (4, 6, 8) mit der Antriebseinheit verbunden ist.

7. Ausstattung nach Anspruch 6, wobei die Steuereinheit eingerichtet ist, ein Antriebsmuster für den Elektromotor (10) auf der Basis der festgestellten Werkzeugklasse unter der Vielzahl von Werkzeugklassen auszuwählen.

8. Ausstattung nach Anspruch 6 oder 7, wobei jedes der Werkzeuge (4, 6, 8) eingerichtet ist, eine charakteristische Vibration aufzuweisen, axial oder radial im Bezug auf die Rotationsachse der mechanischen Schnittstelle, wenn ein Werkzeug mit der Antriebseinheit verbunden ist und vom Motor angetrieben wird.

9. Ausstattung nach einem der Ansprüche 6 bis 8, wobei jedes Werkzeug (4, 6, 8) angepasst ist, mit einer charakteristischen Frequenz zu vibrieren, die der Werkzeugklasse entspricht, wobei jede Werkzeugklasse eine unterschiedliche charakteristische Frequenz hat.

10. Ausstattung nach einem der Ansprüche 6 bis 9, wobei der Vibrationssensor (18) in der Antriebseinheit neben der mechanischen Schnittstelle (16) eingerichtet ist.

11. Verfahren zum Betreiben eines Küchengeräts, das eine Antriebseinheit (2) mit einem Motor (14) und zumindest ein Werkzeug (4, 6, 8) hat, wobei das Werkzeug abnehmbar ist und das Verfahren umfasst:
Verbinden eines Werkzeugs (4, 6, 8) mit der Antriebseinheit;
Antreiben des Motors (14) zum Antreiben des Werkzeugs;
Erfassen der Vibrationen des Werkzeugs (4, 6, 8) mit einem Vibrationssensor (18) in der Antriebseinheit; und
Feststellen der Werkzeugklasse aus den Vibrationen.

12. Verfahren nach Anspruch 11, das weiterhin umfasst:
Wählen eines Antriebsmusters aus einer Vielzahl von Antriebsmustern basierend auf der festgestellten Werkzeugklasse; und
Antreiben des Motors (14) entsprechend dem gewählten Antriebsmuster.

13. Verfahren nach Anspruch 11 oder 12, wobei der Schritt des Antreibens des Motors entsprechend dem gewählten Antriebsmuster das dynamische Anpassen des Motors an die erfassten Vibrationen beinhaltet.

## Revendications

1. Unité d'alimentation (2) d'un appareil de cuisine, comprenant :
une interface mécanique (12) pour connecter un outil ;
un moteur (14) pour faire tourner l'interface mécanique afin d'entraîner l'outil ;
un dispositif de commande (16) pour commander le moteur ; et
un capteur de vibrations (18) agencé pour détecter les vibrations d'un outil (4,6,8) connecté à l'interface mécanique, le capteur de vibrations étant connecté au dispositif de commande (16) pour apporter au dispositif de commande des informations de vibrations représentant la vibration détectée ;
dans laquelle le dispositif de commande (16) est agencé pour identifier quelle classe d'une pluralité de classes d'outils (4,6,8) est connectée à l'unité d'alimentation à partir des informations de vibrations détectées.

2. Unité d'alimentation selon la revendication 1, dans laquelle le dispositif de commande (16) contient une mémoire (22) stockant des informations concernant une pluralité de classes d'outils (4,6,8) et des profils d'entraînement correspondants, le dispositif de commande étant agencé pour entraîner le moteur selon un profil d'entraînement sélectionné parmi une pluralité de profils d'entraînement sur la base de la classe d'outil identifiée.

3. Unité d'alimentation selon la revendication 1 ou 2, dans laquelle le dispositif de commande (16) est agencé pour adapter l'entraînement du moteur (14) de manière dynamique sur la base des informations de vibrations.

4. Unité d'alimentation selon l'une quelconque des revendications 1-3, dans laquelle l'unité d'alimentation (2) comprend un boîtier (10), l'interface mécanique (12) s'étend à travers le boîtier et le capteur de vibrations (16) est agencé dans le boîtier de manière adjacente à l'interface mécanique.

5. Unité d'alimentation selon l'une quelconque des revendications 1-4, dans laquelle le moteur (2) est un moteur sans balai.

6. Kit d'appareil de cuisine comprenant :
une unité d'alimentation (2) comprenant : une interface mécanique (12) pour connecter un outil (4,6,8) ; un moteur électrique (14) pour faire tourner l'interface mécanique afin d'entraîner l'outil ; un dispositif de commande (16) pour commander le moteur électrique ; et un capteur de vibrations (18) agencé pour détecter les vibrations d'un outil connecté à l'interface mécanique, le capteur de vibrations (18) étant connecté au dispositif de commande (16) pour apporter au dispositif de commande des informations représentant la vibration détectée ; et
une pluralité d'outils (4,6,8) pour connexion à l'interface mécanique ;
dans lequel :
chaque outil (4,6,8) vibre quand il est connecté à l'unité d'alimentation ; et
le dispositif de commande est agencé pour identifier quelle classe d'une pluralité de classes d'outils (4,6,8) est connectée à l'unité d'alimentation à partir des informations de vibrations détectées.

7. Kit selon la revendication 6, dans lequel le dispositif de commande est agencé pour sélectionner un profil d'entraînement pour le moteur électrique (10) sur la base de la classe d'outil identifiée parmi la pluralité de classes d'outil.

8. Kit selon la revendication 6 ou 7, dans lequel chacun des outils (4,6,8) est agencé pour avoir une vibration caractéristique axialement ou radialement par rapport à l'axe de rotation de l'interface mécanique quand l'outil est connecté à l'unité d'alimentation et entraîné par le moteur.

9. Kit selon l'une quelconque des revendications 6 à 8, dans lequel chaque outil (4,6,8) est adapté pour vibrer à une fréquence caractéristique correspondant à la classe d'outil, dans lequel chaque classe d'outil a une fréquence caractéristique différente.

10. Kit selon l'une quelconque des revendications 6 à 9, dans lequel le capteur de vibrations (18) est agencé dans l'unité d'alimentation de manière adjacente à l'interface mécanique (16).

11. Procédé de fonctionnement d'un appareil de cuisine comportant une unité d'alimentation (2) avec un moteur (14) et au moins un outil (4,6,8), l'outil pouvant être détaché, le procédé comprenant :
la connexion d'un outil (4,6,8) à l'unité d'alimentation ;
l'entraînement du moteur (14) pour entraîner l'outil ;
la détection des vibrations de l'outil (4,6,8) avec un capteur de vibrations (18) dans l'unité d'alimentation ; et
l'identification de la classe d'outil à partir des vibrations.

12. Procédé selon la revendication 11, comprenant en outre :
la sélection d'un profil d'entraînement parmi une pluralité de profils d'entraînement sur la base de la classe d'outil identifiée ; et
l'entraînement du moteur (14) en fonction du profil d'entraînement sélectionné.

13. Procédé selon la revendication 11 ou 12, dans lequel l'étape d'entraînement du moteur en fonction du profil d'entraînement sélectionné inclut l'adaptation de l'entraînement du moteur de manière dynamique sur la base des vibrations détectées.
